# EUROPÄISCHE PATENTANMELDUNG

(11) **EP 4 786 138 A1**
(43) Veröffentlichungstag der Anmeldung: **05.08.2026**
(21) Anmeldenummer: 26152866.5
(22) Anmeldetag: 20.01.2026
(51) Int. Cl.: B29C 48/12, B29C 48/27, B29C 48/90, B29C 48/355, B29C 48/14, B29C 48/265

(54) **TROCKNUNGSVORRICHTUNG UND VERFAHREN ZUM TROCKNEN DER OBERFLÄCHE EINES KUNSTSTOFFPROFILS**

(30) Priorität: 30.01.2025 DE 102025103372
(71) Anmelder: Veka AG, 48324 Sendenhorst (DE)
(72) Erfinder: Kaldewei, Jochen, 48324 Sendenhorst (DE)
(74) Vertreter: Cohausz Hannig Borkowski Wißgott

(57) **Zusammenfassung**

Die Erfindung betrifft eine Trocknungsvorrichtung und ein Verfahren zum Trocknen der Oberfläche eines Kunststoffprofils (12), insbesondere eines Rahmenprofils eines Fensters oder einer Tür, umfassend eine Blendenanordnung (1) mit einer Profileinlaufseite (ES), einer Profilauslaufseite (AS) und einer sich zwischen diesen Seiten durch die Blendenanordnung (1) hindurcherstreckenden Ausnehmung (3), durch die ein zu trocknendes Kunststoffprofil von der Profileinlaufseite (ES) in der Richtung (R) zur Profilauslaufseite (AS) hindurchführbar ist, wobei in die innere Wandung (3a) der Ausnehmung (3) an der Profileinlaufseite (ES) wenigstens eine Absaugöffnung (4) einmündet, die mit einer luftführenden Unterdruckquelle verbindbar ist, insbesondere im Betrieb verbunden ist, und wobei in die innere Wandung (3a) der Ausnehmung (3) an der Profilauslaufseite (AS) wenigstens eine Ausblasöffnung (5) einmündet, die mit einer luftführenden Überdruckquelle verbindbar ist, insbesondere im Betrieb verbunden ist, wobei Luft von der wenigstens einen Ausblasöffnung (5) durch die Ausnehmung (3) hindurch zu der wenigstens einen Absaugöffnung (4) förderbar ist, insbesondere die Luft bei Hindurchführung eines Kunststoffprofils (12) durch die Ausnehmung (3) in einem sich zwischen der Wandung (3a) der Ausnehmung (3) und dem Kunststoffprofil (12) ergebenden Spaltbereich (13) förderbar ist.

## Beschreibung

Die Erfindung betrifft eine Trocknungsvorrichtung und ein Verfahren zum Trocknen der Oberfläche eines Kunststoffprofils, insbesondere eines Rahmenprofils eines Fensters oder einer Tür.

Die Herstellung von Kunststoffprofilen, z.B. von Kunststoffhohlprofilen für die Fertigung von Rahmen für Fenster und Türen, erfolgt in üblicher Weise durch Extrusion. Nach Verlassen einer Extrusionsvorrichtung ist das extrudierte Kunststoffprofil heiß und noch nicht formstabil. Es ist daher im Regelfall vorgesehen, ein solches extrudiertes Kunststoffprofil wenigstens einer Nachbehandlung zuzuführen, z.B. zu kühlen, insbesondere auch zu kalibrieren, wobei das Kühlen und Kalibrieren auch in derselben Behandlungsstation erfolgen kann.

Da beim Kühlen des Kunststoffprofils Wasser in direkten Kontakt mit der Oberfläche des Kunststoffprofils kommt haften nach einer solchen kühlenden Behandlung, insbesondere gleichzeitig kalibrierenden Behandlung, noch Wassertropfen auf der Oberfläche des Kunststoffprofils, was eine weitere Verarbeitung erschweren kann, insbesondere nachdem das Kunststoffprofil eine solche kühlende und/oder kalibrierende Behandlungsstation verlassen hat.

Z.B. ist anhaftendes Wasser problematisch an solchen Stellen des Kunststoffprofils, an denen eine Anextrusion von weiteren Profilbereichen, z.B. von Dichtungen, insbesondere von Dichtlippen erfolgen soll, weil evtl. dort vorhandenes Wasser die stoffschlüssige Anbindung verhindert.

Weiterhin können Wassertropfen auf der Oberfläche eines Kunststoffprofils in einer messtechnischen optischen Qualitätskontrolle des Kunststoffprofils fälschlicherweise als Oberflächendefekte missinterpretiert werden.

Es ist daher eine Aufgabe der Erfindung eine Trocknungsvorrichtung und ein Verfahren zur Trocknung, insbesondere in Verbindung mit einer erfindungsgemäßen Trocknungsvorrichtung zur Verfügung zu stellen, mit denen eine Reduzierung von anhaftenden Wassertropfen, vorzugsweise eine vollständige Eliminierung von anhaftenden Wassertropfen ermöglicht wird.

Diese Aufgabe wird erfindungsgemäß mit einer Trocknungsvorrichtung gelöst, welche eine Blendenanordnung mit einer Profileinlaufseite, einer Profilauslaufseite und einer sich zwischen diesen Seiten durch die Blendenanordnung hindurcherstreckenden Ausnehmung umfasst, durch die ein zu trocknendes Kunststoffprofil von der Profileinlaufseite in der Richtung zur Profilauslaufseite hindurchführbar ist, wobei in die innere Wandung der Ausnehmung an der Profileinlaufseite wenigstens eine Absaugöffnung einmündet, die mit einer luftführenden Unterdruckquelle verbindbar ist, insbesondere im Betrieb verbunden ist, und wobei in die innere Wandung der Ausnehmung an der Profilauslaufseite wenigstens eine Ausblasöffnung einmündet, die mit einer luftführenden Überdruckquelle verbindbar ist, insbesondere im Betrieb verbunden ist, wobei Luft von der wenigstens einen Ausblasöffnung durch die Ausnehmung hindurch zu der wenigstens einen Absaugöffnung förderbar ist, insbesondere die Luft bei Hindurchführung eines Kunststoffprofils durch die Ausnehmung in einem sich zwischen der Wandung der Ausnehmung und dem Kunststoffprofil ergebenden Spaltbereich förderbar ist.

Unter "Luft" wird dabei sowohl Umgebungsluft verstanden als auch ein Gas oder Gasgemisch mit von der Umgebungsluft abweichender Zusammensetzung.

Vorzugsweise ist dabei vorgesehen, dass genau eine einzige Absaugöffnung in die innere Wandung einmündet. Weiterhin ist vorzugsweise vorgesehen, dass genau eine einzige Ausblasöffnung in die innere Wandung einmündet.

Unter der inneren Wandung wird diejenige Wandung der Ausnehmung verstanden, welche die Profileinlaufseite mit der Profilauslaufseite der Blendenanordnung in der Hindurchführungsrichtung verbindet, bzw. welche sich in dieser Richtung zwischen diesen beiden Seiten durch die Blendenanordnung hindurch erstreckt. Diese innere Wandung umgibt dabei in einer Umfangsrichtung eine in der Ausnehmung liegende Mittenachse, die parallel zur Hindurchführungsrichtung ist. Eine solche Mittenachse kann z.B. durch den geometrischen Schwerpunkt des Querschnitts der Ausnehmung verlaufen.

Durch die erfindungsgemäße Konstruktion ergibt sich ein Luftstrom entgegen der Durchführungsrichtung entlang der Oberfläche des Kunststoffprofils, insbesondere in dem Spaltbereich, der zwischen der Oberfläche des Kunststoffprofils und der inneren Wandung der Ausnehmung liegt. Wassertropfen, die von der Oberfläche nicht direkt beim Passieren der wenigstens einen Absaugöffnung vollständig abgesaugt wurden, werden durch den Luftstrom an der Weiterbeförderung gehindert, weil sie im Luftstrom zur Absaugöffnung zurückgetrieben werden. So kann die Oberfläche des Kunststoffprofils, insbesondere des Kunststoffhohlprofils bevorzugt vollständig getrocknet werden.

Im Verfahren wird die Aufgabe demgemäß dadurch gelöst, dass während der Hindurchführung eines Kunststoffprofils durch die Blendenanordnung Luft durch die wenigstens eine Ausblasöffnung in Richtung zur Oberfläche des Kunststoffprofils ausgeblasen wird, insbesondere in den Spaltbereich zwischen der Oberfläche des Kunststoffprofils und der inneren Wandung der Ausnehmung ausgeblasen wird, und durch die wenigstens eine Absaugöffnung Luft und auf der Oberfläche des Kunststoffprofil anhaftende Wassertropfen aus dem Spaltbereich zwischen der Oberfläche des Kunststoffprofils und der inneren Wandung der Ausnehmung abgesaugt werden, wobei an der Oberfläche des Kunststoffprofils in einem Bereich zwischen der wenigstens eine Ausblasöffnung und der wenigstens einen Absaugöffnung anhaftende Wassertropfen mittels eines sich zwischen der wenigstens einen Ausblasöffnung und der wenigstens einen Absaugöffnung einstellenden Luftstroms, insbesondere durch den Spaltbereich hindurch einstellenden Luftstroms, in Richtung zu der wenigstens einen Absaugöffnung getrieben werden.

Ein mit einer solchen Trocknungsvorrichtung bzw. verfahrensgemäß behandeltes Kunststoffprofil kann so problemlos weiterverarbeitet werden, z.B. kann anschließend eine Anextrusion von weiteren Profilbereichen, z.B. von Dichtungen, insbesondere von Dichtlippen erfolgen oder es kann eine messtechnische optische Prüfung der Oberfläche des Kunststoffprofils erfolgen, ohne das Wassertropfen auf der Oberfläche störend oder verfälschend wirken.

Unter einem Kunststoffprofil im Sinne der Erfindung wird sowohl ein solches verstanden, an dem die Dichtungen fehlen, die noch später an dem Profil befestigt werden sollen, z.B. durch Anextrusion, als auch ein solches, an dem schon die Dichtungen befestigt sind, z.B. durch Anextrusion.

Bevorzugt sieht es die Erfindung vor, dass die Ausnehmung, insbesondere betrachtet senkrecht zur Durchführungsrichtung, eine Querschnittsform hat, die zumindest im Wesentlichen formgleich und um ein Spaltmaß größer ist als die Querschnittsform des hindurchführbaren Kunststoffprofils senkrecht zu dessen Längserstreckungsrichtung.

Die genannte Durchführungsrichtung entspricht dabei der Längserstreckungsrichtung des durch die Blendenanordnung hindurchzuführenden Kunststoffprofils.

So kann überall um das Kunststoffprofil herum ein Abstand zwischen den sich gegenüberliegenden Oberflächen erreicht werden, insbesondere so dass sich die Oberflächen von Kunststoffprofil und innerer Wandung der Ausnehmung bei der Hindurchführung nicht kontaktieren und ein Luftstrom von der wenigstens einen Ausblasöffnung zu der wenigstens einen Absaugöffnung zwischen diesen Öffnungen entlang der Oberfläche des Kunststoffprofils erzeugt werden kann.

Das Spaltmaß muss in der Umfangsrichtung nicht überall gleich sein, vorzugsweise ist aber vorgesehen, dass das Spaltmaß in der Umfangsrichtung um die Hindurchführungsrichtung/Mittenachse zwischen der Oberfläche des Kunststoffprofils und der inneren Wandung der Ausnehmung überall gleich ist oder zumindest über den überwiegenden Teil der Umfangserstreckung gleich ist.

Vorzugsweise ist es vorgesehen, dass das Spaltmaß nur in solchen Bereichen abweichend ist von dem überwiegenden Bereich, insbesondere größer ist als in dem überwiegenden Bereich, wo an das Kunststoffprofil nachträglich Dichtungen anextrudiert werden sollen oder auch bereits anextrudiert sind.

Vorzugsweise hat ein überwiegender Bereich in der Umfangsrichtung eine längere Erstreckung als ein abweichender Bereich.

Bevorzugt ist das Spaltmaß im Bereich von 1/10 mm bis 5/10 mm, vorzugsweise 2/10 mm, zumindest in dem genannten überwiegenden Bereich.

Insbesondere wären ohne Berücksichtigung des Spaltmaßes die beiden Querschnittsformen von der Ausnehmung und dem Kunststoffprofil als kongruent zueinander zu verstehen, insbesondere abgesehen von den Bereichen, in denen Dichtungen / Dichtlippen befestigt sind oder befestigt werden sollen.

Weiter bevorzugt ist die Querschnittsform der Ausnehmung über die gesamte Erstreckung der Ausnehmung in der Hindurchführungsrichtung des Kunststoffprofil, als in der Richtung zwischen Profileinlauf- und Profilauslaufseite überall gleich mit Ausnahme der Stellen, wo die wenigstens eine Ausblasöffnung und/oder die wenigstens eine Absaugöffnung in der inneren Wandung der Ausnehmung angeordnet ist.

Eine konstruktiv bevorzugte Ausführung sieht es vor, dass die wenigstens eine Absaugöffnung von einer an der Profileinlaufseite liegenden Oberfläche der Blendenanordnung beabstandet ist und die wenigstens eine Ausblasöffnung von einer an der Profilauslaufseite liegenden Oberfläche der Blendenanordnung beabstandet ist, wobei diese beiden Abstände jeweils kleiner sind als der Abstand zwischen der wenigstens einen Absaugöffnung und der wenigstens einen Ausblasöffnung.

Hierbei wird der Abstand jeweils in der Hindurchführungsrichtung betrachtet.

Durch den Abstand der Öffnungen zur Profileinlaufseite und/oder zur Profilauslaufseite wird sichergestellt, dass eine Wechselwirkung mit der Umgebungsluft zumindest überwiegend vermieden wird, insbesondere also verhindert wird, dass aus der Umgebung Luft in signifikanter Menge in die wenigstens eine Absaugöffnung eingesogen wird und dass Luft von der wenigstens einen Ausblasöffnung in signifikanter Menge in die Umgebung gelangt.

Die Beabstandung stellt sicher, dass die Luft von der Ausblasöffnung zumindest überwiegend in Richtung zur Absaugöffnung durch die Ausnehmung, bzw. den genannten Spalt strömt. Vorzugsweise ist der Abstand der Absaugöffnung von einer einlaufseitigen Oberfläche der Blendenanordnung und/oder der Abstand der Ausblasöffnung von einer auslaufseitigen Oberfläche der Blendenanordnung größer als 2mm, vorzugsweise größer als 3 mm, vorzugsweise größer als 4 mm, vorzugsweise größer als 5 mm.

Durch den Abstand zwischen den Öffnungen, vorzugsweise der größer ist als 10 mm, weiter bevorzugt größer ist als 15 mm, wird ein genügend langer Weg der Wechselwirkung zwischen dem Luftstrom und den Wassertropfen gewährleistet.

Eine bevorzugte Weiterbildung sieht es vor, dass eine jeweilige Ausblasöffnung und eine jeweilige Absaugöffnung in der Wandung der Ausnehmung schlitzförmig ausgebildet ist, insbesondere schlitzförmig mit einer Erstreckung des Schlitzes senkrecht zur Durchführungsrichtung, insbesondere schlitzförmig mit einer Erstreckung des Schlitzes in der Umfangsrichtung um die Mittenachse, vorzugsweise wobei die Erstreckungslänge eines Schlitzes größer ist als die Breite des Schlitzes in der Durchführungsrichtung, weiter bevorzugt mit einer in der Umfangsrichtung ununterbrochenen Erstreckung des Schlitzes einer einzigen Ausblasöffnung und/oder Absaugöffnung in der inneren Wandung der Ausnehmung.

Durch eine ununterbrochene Schlitzerstreckung von einer einzigen Absaugöffnung und/oder Ausblasöffnung wird erzielt, dass die Absaugung bzw. die Einwirkung der Luft auf Tropfen über einen am Ort der Öffnung in der Umfangsrichtung vollständig zusammenhängenden Oberflächenbereich des Kunststoffprofil erfolgt.

Sind bei der Erfindung nicht nur eine einzige Ausblasöffnung und/oder eine einzige Absaugöffnung vorhanden, so sieht es die Erfindung bevorzugt vor, dass bei einer Mehrzahl von in der inneren Wandung der Ausnehmung in Umfangsrichtung um die Mittenachse herum nebeneinander angeordneten Ausblasöffnungen und/oder Absaugöffnungen die Summe der Erstreckungslängen aller Ausblasöffnungen in der Umfangsrichtung und/oder die Summe der Erstreckungslängen alle Absaugöffnungen in der Umfangsrichtung jeweils mindestens 90 % der gesamten Umfangslänge der inneren Wandung der Ausnehmung beträgt.

Eine mögliche Ausführung kann es vorsehen, dass die genannte Blendenanordnung durch einen einzigen Körper ausgebildet ist, in dessen Volumen die wenigstens eine Ausblasöffnung, die wenigstens eine Absaugöffnungen und Verbindungen zu diesen Öffnungen ausgebildet sind, insbesondere die in Anschlüsse in wenigstens einer Seitenfläche des Blendenkörpers münden. In einem metallischen Körper kann dies z.B. durch Erodieren und/oder spanabhebende Bearbeitung erzielt werden. Es besteht auch die Möglichkeit eine solchen Körper aus Kunststoff oder auch aus Metall durch ein generatives Fertigungsverfahren herzustellen, z.B. durch 3D-Druck.

Eine konstruktiv bevorzugte Ausführung der Erfindung sieht hingegen vor, dass die Blendenanordnung einen Blendenkörper umfasst, der an der Profileinlaufseite eine Montagefläche aufweist, an der eine Einlaufplatte mit ihrer Montagefläche befestigt ist und/oder der an der Profilauslaufseite eine Montagefläche aufweist, an der eine Auslaufplatte mit ihrer Montagefläche befestigt ist, wobei die Ausnehmung durch den Blendenkörper, die Einlaufplatte und/oder die Auslaufplatte erstreckt ist und wobei die wenigstens eine Absaugöffnung zwischen Blendenkörper und Einlaufplatte ausgebildet ist und/oder die wenigstens eine Ausblasöffnung zwischen Blendenkörper und Auslaufplatte ausgebildet ist.

Die beiden Montageflächen des Blendenkörpers sind dabei bevorzugt parallel zueinander mit einem Abstand, welcher der Dicke des Blendenkörpers in der Hindurchführungsrichtung entspricht. Die Montageflächen bilden dabei vorzugsweise die in der Hindurchführungsrichtung am weitesten voreinander entfernten Flächen des Blendenkörpers.

Vorzugsweise ergibt sich die genannte Ausnehmung in der Blendenanordnung durch fluchtend hintereinander liegende Ausnehmung in der Einlaufplatte, dem Blendenkörper und der Auslaufplatte. Bevorzugt sind dabei die Ausnehmung in dem Blendenkörper, der Einlaufplatte und der Auslaufplatte identisch ausgebildet, insbesondere abgesehen von einem Bereich von einer Seite oder von beiden Seiten angrenzend an eine Montageebene, in welcher sich die jeweiligen aufeinander zuweisenden Montageflächen kontaktieren. Diese Abweichung ergibt sich daraus, dass durch die Abweichungen die wenigstens eine Ausblasöffnung und/oder die wenigstens eine Absaugöffnung realisiert ist.

Durch die vorgenannte(n) Ausbildung(en) ergeben sich konstruktive oder fertigungstechnische Vorteile, weil die wenigstens eine Ausblasöffnung und/oder die wenigstens eine Absaugöffnungen durch Bearbeitung des Blendenkörpers und/oder der Einlaufplatte und/oder der Auslaufplatte in einem Bereich der jeweiligen Montagefläche erreicht werden können. Dies ist besonders einfach durch z.B. spanabhebende Bearbeitung möglich.

Bevorzugt ist es vorgesehen, dass an der zur Einlaufplatte weisenden Seite und/oder an der zur Auslaufplatte weisenden Seite des Blendenkörpers an der Öffnung von dessen Ausnehmung wenigstens ein Randflächenbereich vorgesehen ist, insbesondere der in die innere Wandung der Ausnehmung übergeht, der unter das Niveau von dessen Montagefläche abgesenkt ist, und/oder dass an der zum Blendenkörper weisenden Seite der Auslaufplatte und/oder der Einlaufplatte an der Öffnung von deren Ausnehmung wenigstens ein Randflächenbereich vorgesehen ist, insbesondere der in die innere Wandung der Ausnehmung übergeht, der unter das Niveau von deren Montagefläche abgesenkt ist.

Die genannten abgesenkten Randflächenbereiche umgrenzen mit einem jeweils gegenüberliegenden Oberflächenbereich, insbesondere der auch ein abgesenkter Randflächenbereich sein kann, aber nicht sein muss, die jeweilige, vorzugsweise schlitzförmige Absaugöffnung bzw. Ausblasöffnung in der Durchführungsrichtung.

Abgesenkte Randflächenbereiche sind besonders bevorzugt nur an der Einlaufseite und der Auslaufseite von dem Blendenkörper vorgesehen, nicht aber an der Einlaufplatte und auch nicht an der Auslaufplatte. Vorzugsweise ist die Oberfläche dieser beiden Platte, welche zum Blendenkörper weist, durchgängig in derselben Ebene, in welcher die Montagefläche liegt.

Eine Einlaufplatte und eine Auslaufplatte sind in bevorzugter Ausführung einfache Platten mit planparallelen Oberflächen, welche einen Abstand zueinander haben, welcher der Dicke der jeweilige Platte entspricht. Eine solche Platte ist sodann nur von einer Ausnehmung durchsetzt, die vorzugsweise in Form und Größe der Ausnehmung im Blendenkörper entspricht und nach Montage der jeweilige Platte am Blendenkörper zu dieser fluchtend ist.

Vorzugsweise haben der Blendenkörper und eine jeweilige daran zu montierende Platte zusammenwirkende Passungselemente. Insbesondere wird durch diese die fluchtende Ausrichtung der Ausnehmungen gewährleistet.

Weiter bevorzugt ist vorgesehen, dass der wenigstens eine Randflächenbereich an der Profileinlaufseite des Blendenkörpers zur Montagefläche des Blendenkörpers an der Profileinlaufseite einen größeren Abstand aufweist als der wenigstens eine Randflächenbereich an der Profilauslaufseite des Blendenkörpers zur Montagefläche des Blendenkörpers an der Profilauslaufseite.

Der Betrag des Abstandes des abgesenkten Randflächenbereiches von der Montagefläche bildet vorzugsweise die in der Durchführungsrichtung betrachtete Schlitzbreite der durch den abgesenkten Randflächenbereich und die gegenüberliegende Montagefläche der Einlaufplatte oder der Auslaufplatte gebildete Öffnung.

Demnach ergibt sich durch die vorgenannte Ausführung vorzugsweise, dass die Schlitzbreite der wenigstens einen Absaugöffnung größer ist als die Schlitzbreite der wenigstens einen Ausblasöffnung.

Vorzugsweise ist die Schlitzbreite der wenigstens einen Absaugöffnung größer als 1 mm, vorzugsweise größer als 2mm, vorzugsweise größer als 3 mm, vorzugsweise größer als 4 mm, vorzugsweise größer als 5 mm.

Vorzugsweise ist die Schlitzbreite der wenigstens eine Ausblasöffnung kleiner als 2 mm, vorzugsweise kleiner als 1 mm, vorzugsweise kleiner gleich 0,5 mm.

Eine konstruktiv mögliche Ausführung sieht es bevorzugt vor, dass zwischen dem Blendenkörper und der Einlaufplatte und/oder zwischen dem Blendenkörper und der Auslaufplatte auf der von der Ausnehmung abgewandten Seite des wenigstens einen im Niveau abgesenkten Randflächenbereichs ein Kanal ausgebildet ist, insbesondere der sich zumindest bereichsweise entlang des wenigstens einen abgesenkten Randflächenbereichs erstreckt, aus dem Luft in den Randflächenbereich oder in den Luft von dem Randflächenbereich strömen kann. Dabei ist vorzugsweise vorgesehen, dass ein solcher Kanal nur bei den Randflächenbereichen vorgesehen ist, mit denen die wenigstens eine Ausblasöffnung gebildet wird.

Bevorzugt ist weiterhin vorgesehen, dass ein jeweiliger Kanal, vorzugsweise zumindest an einem von dessen Enden, oder zwischen den Enden eine Mündungsöffnung einer Verbindungsleitung aufweist, mit welcher der Kanal mit einer Anschlussöffnung in einer seitlichen Stirnfläche des Blendenkörpers verbunden ist.

Eine bevorzugte Konstruktion sieht es weiterhin vor, dass in Umfangsrichtung um die Öffnung der Ausnehmung vom Blendenkörper an dessen Profileinlaufseite und/oder an dessen Profilauslaufseite, und/oder in Umfangsrichtung um die Öffnung der Ausnehmung von der Auslaufplatte an deren zum Blendenkörper weisenden Seite und/oder in Umfangsrichtung um die Öffnung der Ausnehmung von der Einlaufplatte an deren zum Blendenkörper weisenden Seite der wenigstens eine abgesenkte Randflächenbereich in mehrere aneinander angrenzende abgesenkte Randflächenteilbereiche unterteilt ist, die durch Teilflächenbereiche der jeweiligen Montagefläche voneinander vollständig separiert sind, insbesondere dadurch, dass ein jeweiliger Teilflächenbereich der jeweiligen Montagefläche bis an die innere Wandung der Ausnehmung heranreicht, oder teilweise separiert sind, insbesondere dadurch, dass ein jeweiliger Teilflächenbereich der jeweiligen Montagefläche in einem Abstand vor der inneren Wandung der Ausnehmung endet.

Durch die letztgenannte Ausführung ergibt es sich, dass die nur teilweise separierten Randflächenbereiche an einem an die innere Wandung der Ausnehmung angrenzenden Bereich ineinander übergehen und in einem von der Ausnehmung beabstandeten Bereich separiert sind.

Daraus resultiert, dass nach Befestigen einer Auslaufplatte oder Einlaufplatte an der jeweiligen Montagefläche des Blendenkörpers die hierdurch gebildete schlitzförmige Öffnung in Umfangsrichtung um die Mittenachse vollständig durchgängig ist und erst ab einer Tiefe, die dem Abstand eines separierenden Teilflächenbereichs von der inneren Wandung der Ausnehmung entspricht, sich die schlitzförmige Öffnung aufteilt.

So kann über den gesamten Umfang eines Kunststoffprofils Luft ausgeblasen oder abgesaugt werden, ohne dass es strömungstechnische Totgebiete gibt, wobei die verschiedenen Randflächenbereiche mit unterschiedlichen Kanälen fluidtechnisch verbunden sein können, insbesondere die sich in Bereichen zwischen zwei separierenden Teilflächenbereichen der Montagefläche erstrecken.

Insbesondere ist es vorgesehen, dass jedem von mehreren teilweise oder vollständig separierten abgesenkten Randflächenbereichen ein eigener Kanal zugeordnet ist.

Besonders bevorzugt ist ein Kanal, insbesondere ein jeweilig zugeordneter Kanal durch eine Materialausnehmung ausschließlich nur im Blendenkörper ausgebildet. Im Bereich einer solchen Materialausnehmung ist die Kanalwandung gegenüber dem Niveau der Montagefläche stärker / tiefer abgesenkt als der in Richtung zur Ausnehmung vor der Kanalwand liegende Randflächenbereich.

Vorzugsweise ist ein solcher Kanal, insbesondere jeweilig zugeordneter Kanal nur an der Profilauslaufseite des Blendenkörpers vorgesehen, vorzugsweise um einen genügend großen Volumenstrom im Blendenkörper am Ort der Ausblasöffnung bereitstellen zu können, deren Schlitzbreite geringer ist als bei der Absaugöffnung.

Aufgrund der höheren Breite bei der Absaugöffnung ist es vorzugsweise dort nicht nötig auf der von der Ausnehmung abgewandten Seite des wenigstens einen abgesenkten Randbereiches einen oder mehrere Kanäle vorzusehen.

Die Erfindung sieht es bevorzugt vor, dass eine erfindungsgemäße Trocknungsvorrichtung mit einem Kunststoffprofil eine Kombination bildet, da die Querschnittskontur der Ausnehmung in der Blendenanordnung an die Querschnittskontur des Kunststoffprofils derart angepasst ist, dass das Kunststoffprofil berührungslos unter Wahrung eines Abstandes durch die Ausnehmung hindurchführbar ist, vorzugsweise wobei der Abstand zwischen der inneren Oberfläche der Ausnehmung und der gegenüberliegenden Oberfläche des Kunststoffprofils, insbesondere betrachtet senkrecht zu den sich gegenüberliegenden Oberflächen, überall zumindest im Wesentlichen gleich ist oder zumindest im überwiegenden Bereich der Umfangserstreckung eines Kunststoffprofils gleich ist.

Insbesondere kann es vorgesehen sein, dass der Abstand zwischen einem Oberflächenbereich des Kunststoffprofil und der inneren Wandung der Ausnehmung an solchen Stellen größer ist als in dem ansonsten überwiegenden Bereich der Umfangserstreckung eines Kunststoffprofils, in welchen später nach Durchlaufen der Trocknungsvorrichtung noch Dichtlippen an das Kunststoffprofil anextrudiert werden sollen.

Eine bevorzugte Ausführung wird anhand der Figuren näher beschrieben.

Die Figuren zeigen alle dieselbe bevorzugte Ausführungsform der Erfindung und werden nachfolgend gemeinsam beschrieben.

Die Trocknungsvorrichtung umfasst eine Blendenanordnung 1, welche vorliegend dreiteilig ausgebildet ist durch einen Blendenkörper 1a, eine Einlaufplatte 1b und eine Auslaufplatte 1c. Zur Bildung der Blendenanordnung 1 wird die Einlaufplatte 1b mit ihrer Montagefläche auf der Einlaufseite ES an der einlaufseitigen Montagefläche des Blendenkörpers 1a befestigt und die Auslaufplatte 1c wird mit deren Montagefläche auf der auslaufseitigen Montagefläche des Blendenkörpers 1a befestigt. Eine solche Befestigung erfolgt z.B. durch Schrauben. Die korrekte Lage dieser Elemente zueinander kann vorzugsweise z.B. durch Passungselemente 2 an den jeweiligen Montageflächen erzielt werden, die bei der Befestigung miteinander in Eingriff gelangen. Z.B. können in den Montageflächen des Blendenkörpers Passungsausnehmungen vorgesehen sein und an den Montageflächen der beiden genannten Platte Passungsstifte, oder umgekehrt.

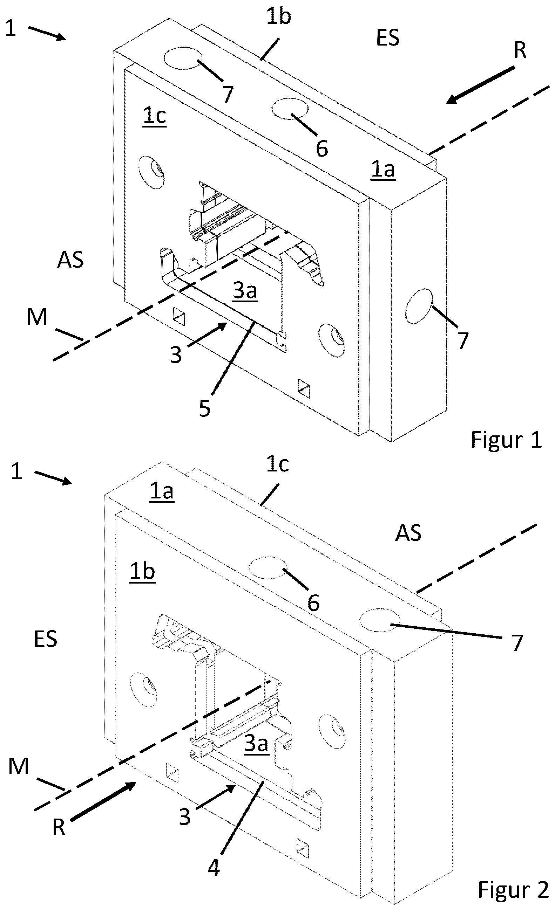

Die Figur 1 zeigt eine gebildete Blendenanordnung in perspektivischer Ansicht auf die Auslaufseite AS und die Figur zeigt diese Blendenanordnung in perspektivischer Ansicht auf die Einlaufseite ES.

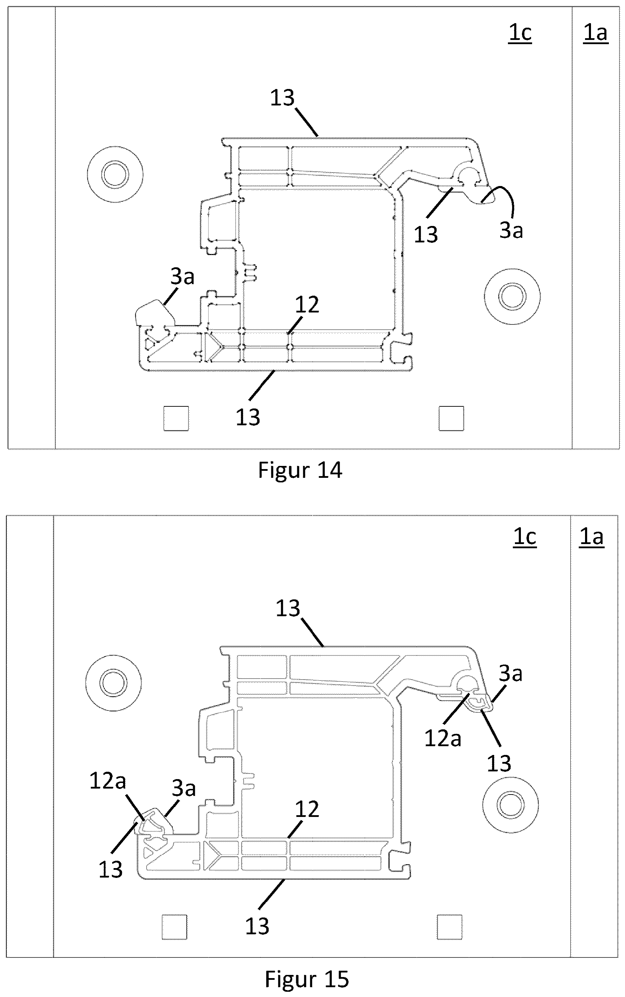

Es ist zur verfahrensgemäßen Trocknung eines nur in den Figuren 14 und 15 gezeigten Kunststoffprofils 12, z.B. eines Kunststoffhohlprofils 12 mit Hohlkammern vorgesehen, dieses in einer Hindurchführungsrichtung R, die sich von der Einlaufseite ES durch die Blendenanordnung 1 zur Auslaufseite AS erstreckt, hindurchzuführen, wofür die Blendenanordnung eine Ausnehmung 3 aufweist. Insbesondere korrespondiert die Hindurchführungsrichtung R mit der Richtung einer Mittenachse M, die z.B. durch die geometrische Mitte bzw. den Flächenschwerpunkt der Querschnittsform der Ausnehmung 3 führt.

Die Ausnehmung 3 geht jeweils form- und größengleich vollständig durch die Platten 1b, 1c und den von diesen umgebenen Blendenkörper 1a.

Abweichungen von dieser Form und Größe der Ausnehmung 3 gibt es allenfalls in einer Umgebung um die Montagefläche von Platten 1b und/oder 1c und/oder des Blendenkörpers 1a, insbesondere nämlich zur Bildung einer Absaugöffnung 4 und/oder einer Ausblasöffnung 5.

Die Absaugöffnung 4 ist hier einlaufseitig zwischen der Einlaufplatte 1b und dem Blendenkörper 1a ausgebildet und die Ausblasöffnung 5 auslaufseitig zwischen der Auslaufplatte 1c und dem Blendenkörper 1a. Jede der beiden Öffnungen 4,5 ist schlitzförmig ausgebildet und erstreckt sich in einer Umfangsrichtung um die Mittenachse M über volle 360 Grad in der inneren Wandung 3a der Ausnehmung 3.

Betrachtet in der Hindurchführungsrichtung R ist die Schlitzbreite der Absaugöffnung 4 größer als die Schlitzbreite der Ausblasöffnung 5.

Erfindungsgemäß besteht die Möglichkeit über Anschlußöffnungen 6 in einer Stirnfläche, z.B. hier der oberen und untere Stirnfläche des Blendenkörpers 1a, welche über Verbindungsleitungen im Blendenkörper 1a mit der Absaugöffnung 4 verbunden sind, Luft im Bereich der Absaugöffnung von der Oberfläche eines durch die Blendenanordnung 1 hindurchgeführten Kunststoffprofils 12 abzusaugen und hierbei evtl. Wassertropfen, die auf der Oberfläche anhaften, mitzureißen.

Gleichzeitig kann über Anschlußöffnungen 7 in der Stirnfläche, z.B. hier einer oberen und seitlichen Stirnfläche des Blendenkörpers 1a, welche über Verbindungsleitungen im Blendenkörper 1a mit der Ausblasöffnung 5 verbunden sind, Luft im Bereich der Ausblasöffnung 5 auf die Oberfläche eines durch die Blendenanordnung 1 hindurchgeführten Kunststoffprofils geblasen werden. Hierdurch stellt sich auch ein Luftstrom von der Ausblasöffnung 5 in Richtung zur Absaugöffnung 4 ein, der entlang der Oberfläche eines Kunststoffprofils durch den zwischen der inneren Wandung 3a der Ausnehmung 3 und der Oberfläche des Kunststoffprofils gebildeten Spaltbereich 13 führt und der hier über den gesamten Umfang des Kunststoffprofils 12 geschlossen ist. Dies wird dadurch erreicht, dass die jeweilige schlitzförmige Öffnung 4,5 ebenfalls über die gesamte Umfangserstreckung der inneren Wandung 3a der Ausnehmung 3 offen ist.

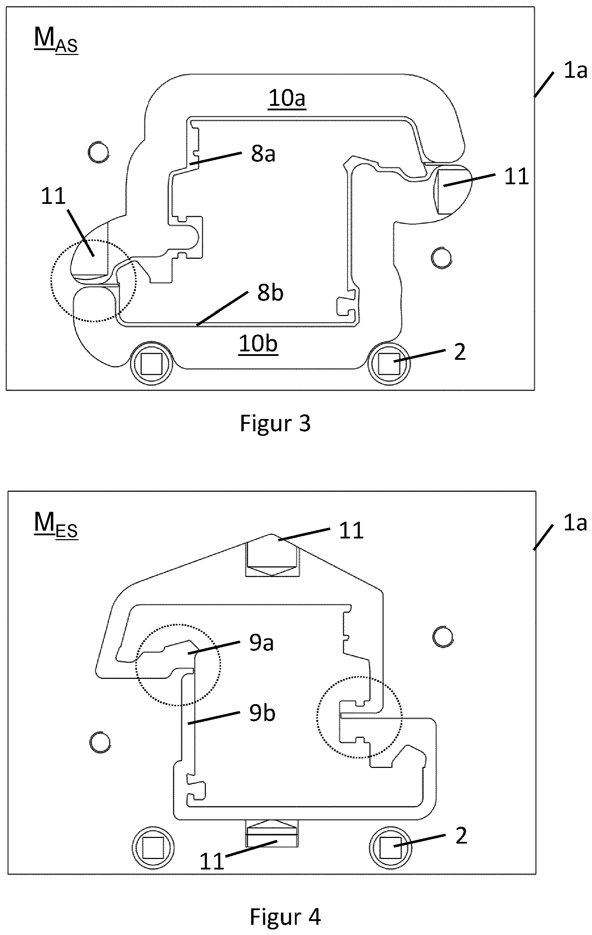

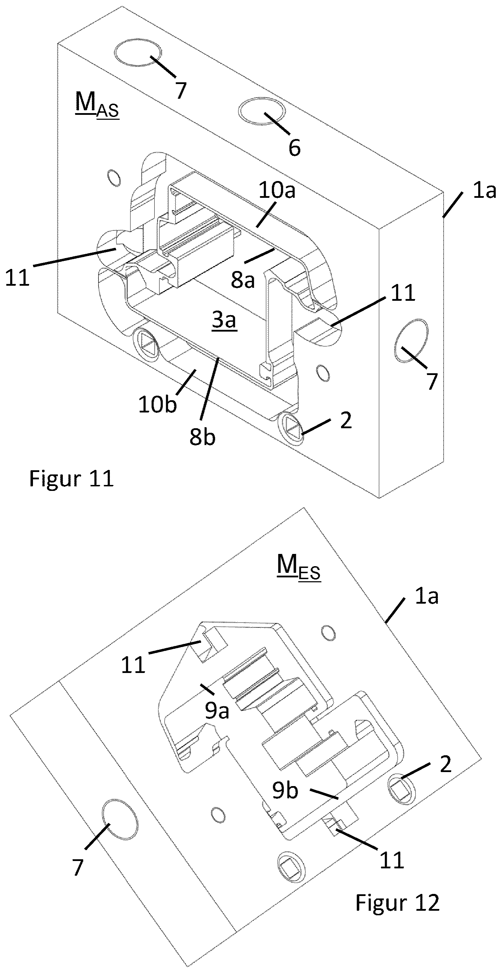

Die Figur 3 zeigt eine Aufsicht auf die Montagefläche M_{AS} des Blendenkörpers 1a von der Auslaufseite AS und die Figur 4 zeigt eine Aufsicht auf die Montagefläche M_{ES} des Blendenkörpers 1a von der Einlaufseite ES. Die Figuren 11 und 12 zeigen die zugehörigen perspektivischen Ansichten.

Zur Bildung einer Ausblasöffnung 5 weist der Blendenkörper 1a auslaufseitig einen an die innere Wandung 3a der Ausnehmung 3 angrenzenden Randflächenbereich 8 auf, der gegenüber dem Niveau der Montagefläche M_{AS} abgesenkt ist, vorzugsweise um ein Maß kleiner als 1 mm abgesenkt ist. Dieser abgesenkte Randflächenbereich 8 erstreckt sich über volle 360 Grad um die Öffnung der Ausnehmung 3 herum und geht in die innere Wandung 3a über, zu welcher der Randflächenbereich 8 vorzugsweise unter 90 Grad orientiert ist.

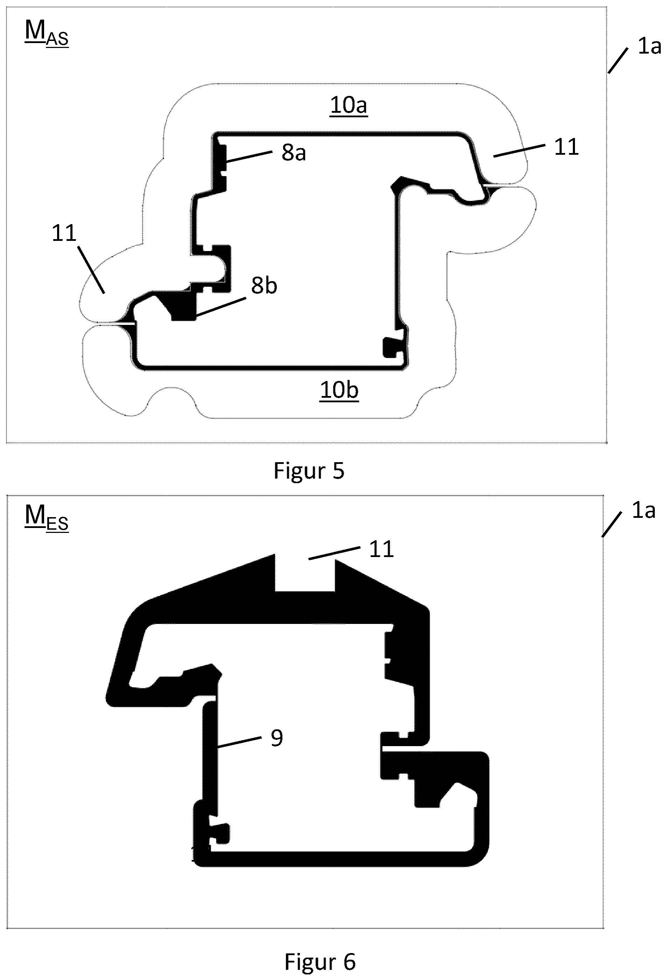

Der abgesenkte Randflächenbereich 8 ist zur Verbesserung der Erkennbarkeit in der Darstellung der Figur 5 vollständig geschwärzt gezeigt. Die Fläche des Randflächenbereichs 8 umgrenzt mit der gegenüberliegenden Montagefläche der Auslaufplatte 1c, die schlitzförmige Ausblasöffnung 5. Vorzugsweise weist in der hier diskutierten Ausführung die Auslaufplatte 1c auf der zum Blendenkörper 1a weisenden Seite keinen abgesenkten Randflächenbereich auf, ein solcher kann aber auch dort, oder auch nur dort vorhanden sein.

In analoger Weise weist zur Bildung einer Absaugöffnung 4 der Blendenkörper 1a einlaufseitig einen an die innere Wandung 3a der Ausnehmung 3 angrenzenden Randflächenbereich 9 auf, der gegenüber dem Niveau der Montagefläche M_{ES} abgesenkt ist, vorzugsweise um ein Maß größer als 1 mm abgesenkt ist. Dieser abgesenkte Randflächenbereich 9 erstreckt sich über volle 360 Grad um die Öffnung der Ausnehmung 3 herum und geht in die innere Wandung 3a über, zu welcher der Randflächenbereich 9 vorzugsweise unter 90 Grad orientiert ist. Der abgesenkte Randflächenbereich 9 ist zur Verbesserung der Erkennbarkeit in der Darstellung der Figur 6 vollständig geschwärzt gezeigt. Die Fläche des Randflächenbereichs 9 umgrenzt mit der gegenüberliegenden Montagefläche der Einlaufplatte 1b, die schlitzförmige Absaugöffnung 4. Vorzugsweise weist in der hier diskutierten Ausführung die Einlaufplatte 1b auf der zum Blendenkörper 1a weisenden Seite keinen abgesenkten Randflächenbereich auf, ein solcher kann aber auch dort, oder auch nur dort vorhanden sein.

In beiden genannten Fällen wird somit die jeweilige Öffnung 4, 5 erst durch die Befestigung der jeweiligen Platte 1b, 1c am Blendenkörper 1a gebildet, insbesondere einseitig oder beidseitig angrenzend an eine Ebene, in welcher sich die Montageflächen von jeweiliger Platte 1b, 1c und Blendenkörper 1a kontaktieren.

Mit Bezug auf Figur 3 sind außen um den Randflächenbereich 8, also auf der von der Ausnehmung 3 abgewandten Seite des Randflächenbereichs 8 zwei Kanäle 10a und 10b gebildet, welche über Verbindungsleitungen 11 mit den vorgenannten Anschlußöffnungen 7 verbunden sind. Die Kanäle 10a und 10b sind hier durch nutförmige Materialausnehmungen im Blendenkörper 1a gebildet, in denen die jeweilige nutförmige Kanalwandung unter das Niveau des abgesenkten Randflächenbereichs 8 abgesenkt ist. Die Kanäle 10a, 10b werden ebenso zwischen Blendenkörper 1a und der Auslaufplatte 1c gebildet, wie der Randflächenbereich 8, wobei hier die abgesenkte Kanalwandung nur im Blendenkörper 1a ausgebildet ist, aber auch oder nur in der Auslaufplatte 1c ausgebildet sein kann. Vorzugsweise ist auch die Breite des jeweiligen Kanals 10a, 10b größer als die Breite des Randflächenbereichs 8. Vorzugsweise wird dabei die Breite senkrecht zur inneren Wandung 3a der Ausnehmung 3 betrachtet oder radial zur Mittenachse M. So kann mit möglichst geringem Strömungswiderstand Luft bis an den Randflächenbereich 8 herangeführt werden.

Der abgesenkte Randflächenbereich 8 kann somit aus zwei Kanälen 10a, 10b angeströmt werden, wobei es hier vorgesehen ist, dass ein Randflächenteilbereich 8a überwiegend aus dem Kanal 10a angeströmt wird und dass ein Randflächenteilbereich 8b überwiegend aus dem Kanal 10b angeströmt wird. Der abgesenkte Randflächenbereich 8 ist hier also in Umfangsrichtung in zwei aneinander angrenzende Randflächenteilbereiche 8a, 8b unterteilt, die ineinander übergehen, insbesondere in einem Bereich 8c angrenzend an die innere Wandung 3a der Ausnehmung 3. Diese Randflächenteilbereiche 8a, 8b sind hierzu teilweise, aber nicht vollständig voneinander separiert, dadurch, dass sich zwischen den Randflächenteilbereichen 8a, 8b Teilbereiche TM_{AS} der Montagefläche M_{AS} in Richtung zur Öffnung der Ausnehmung 3 erstrecken und in einem Abstand vor der inneren Wandung 3a der Ausnehmung enden. Zwischen der inneren Wandung 3a und dem Ende eines sich auf die Öffnung zu erstreckenden Teilbereichs TM_{AS} sind somit die Randflächenteilbereiche 8a, 8b in einem Bereich 8c verbunden, bzw. ineinander niveaugleich übergehend.

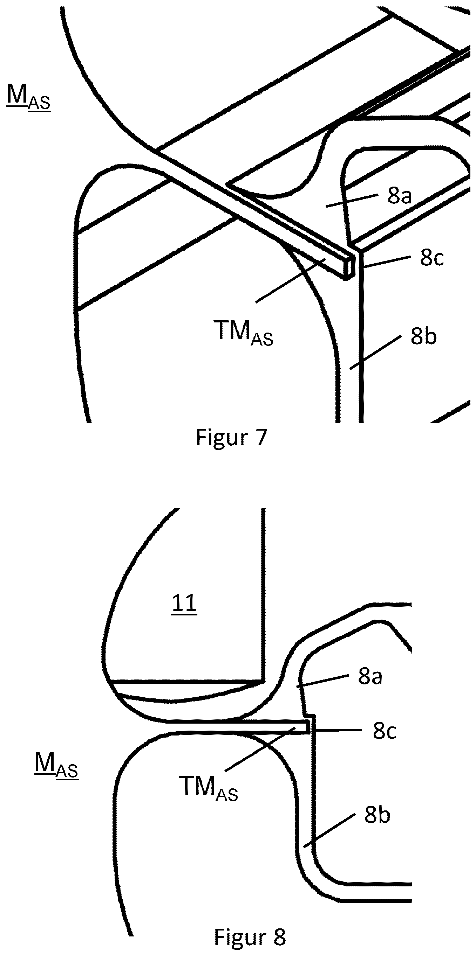

Der in der Figur 3 gepunktet eingekreiste Bereich ist im Detail vergrößert perspektivisch und in Aufsicht in den Figuren 7 und 8 dargestellt. Hier ist deutlich zu erkennen, dass die Randflächenteilbereiche 8a, 8b eine Verbindung 8c aufweisen, insbesondere in welcher der Radflächenbereich 8 aus beiden Kanälen 10a, 10b angeströmt ist. Diese Verbindung 8c stellt sicher, dass die schlitzförmige Ausblasöffnung 5 in der Umfangsrichtung vollständig durchgängig ist.

Mit Bezug auf Figur 4 ist erkennbar, dass Verbindungsleitungen 11 direkt ohne zusätzliche Kanäle in den abgesenkten Randflächenbereich 9 münden. Dies ist einlaufseitig bei der Absaugöffnung 5 möglich, weil die Schlitzbreite der Absaugöffnung 4 deutlich größer ist als bei der Ausblasöffnung, somit also bereits in dem zwischen dem Randflächenbereich 9 und der gegenüberliegenden Montagefläche der Einlaufplatte 1b gebildeten Schlitz ein genügend großer Volumenstrom erzielbar ist. Kanäle wie zur Figur 3 beschrieben könnten aber auch hier außen von dem Randflächenbereich 9 in analoger Weise ausgebildet sein.

Auch hier ist es vorgesehen, dass der Randflächenbereich 9 in zwei in Umfangsrichtung aneinander angrenzende Randflächenteilbereiche 9a, 9b unterteilt ist, die niveaugleich ineinander übergehen. Für jeden Randflächenteilbereich 9a, 9b ist eine eigene Verbindungsleitung 11 zur Absaugung vorgesehen. Eine teilweise Separierung erfolgt hier ebenso dadurch, dass sich Teilflächenbereiche TM_{ES} der einlaufseitigen Montagefläche M_{ES} zwischen den Randflächenteilbereichen 9a, 9b in Richtung zur Öffnung der Ausnehmung 3 erstrecken und in einem Abstand vor der inneren Wandung 3a der Ausnehmung 3 enden. Zwischen der inneren Wandung 3a und dem Ende eines sich auf die Öffnung zu erstreckenden Teilbereichs TM_{ES} sind somit die Randflächenteilbereiche 9a, 9b verbunden, bzw. ineinander niveaugleich übergehend.

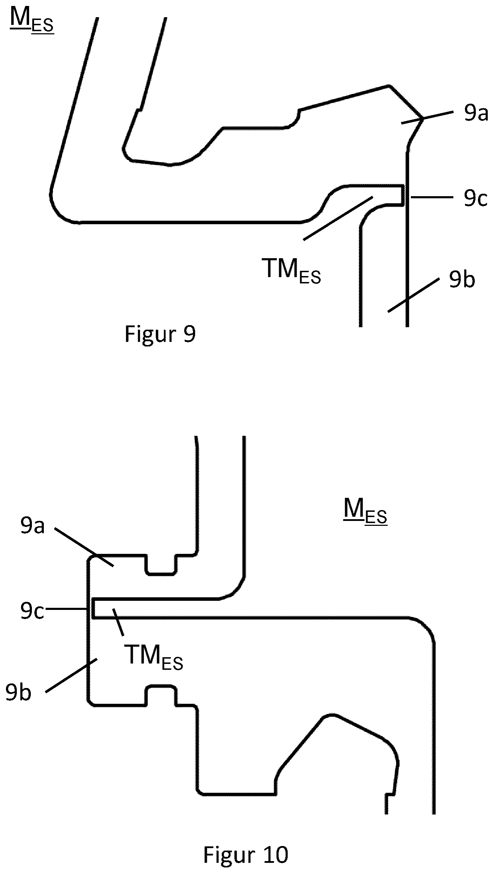

Die in der Figur 4 gepunktet eingekreisten Bereiche sind im Detail vergrößert in Aufsicht in den Figuren 9 und 10 dargestellt. Hier ist deutlich zu erkennen, dass die Randflächenteilbereiche 9a, 9b eine Verbindung 9c aufweisen, die mit beiden Randflächenteilbereichen 9a, 9b verbunden ist. Diese Verbindung 9c stellt sicher, dass die schlitzförmige Absaugöffnung 4 in der Umfangsrichtung vollständig durchgängig ist.

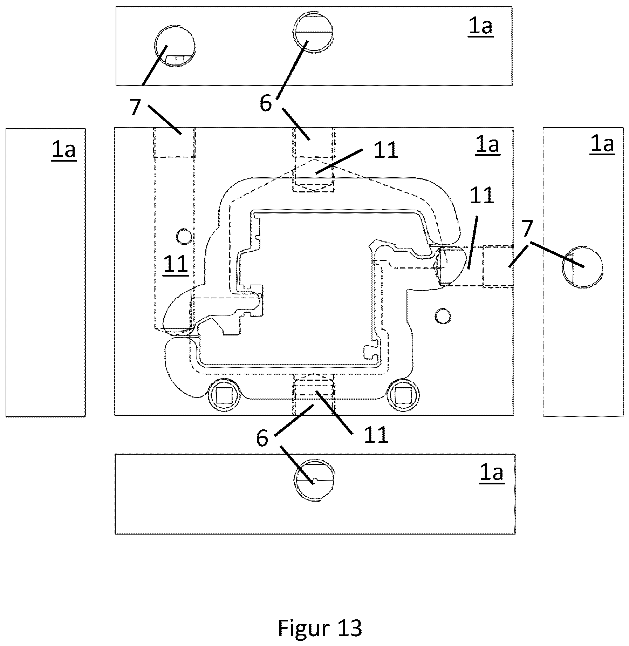

Die Figur 13 verdeutlich in einer Aufsicht und Durchsicht die Lage der Randflächenbereiche 8 und 9 sowie der Verbindungsleitungen 11 im Blendenkörper 1a zueinander. Dabei ist die Kontur des Randflächenbereichs 9 und der Verbindungsleitungen 11 gestrichelt dargestellt.

Die Einlaufplatte 1b und die Auslaufplatte 1c sind außer in den Figuren 1 und 2 nicht, bzw. in den Figuren 14 und 15 nur die Auslaufplatte 1c dargestellt. Es sind vorzugsweise einfache plane Platten mit den Ausnehmungen 3, insbesondere die auf der Montagefläche allenfalls wenigstens ein Passungselement aufweisen, z.B. einen Passungsstift, vorzugsweise aber ansonsten plan sind.

Die Figuren 14 und 15 zeigen als Kunststoffprofil 12 jeweils ein Kunststoffhohlprofil mit Hohlkammern, wie es z.B. von Fenster- oder Türprofilen bekannt ist. In Figur 14 ist dabei das Kunststoffprofil 12 ohne daran befestigte Dichtungen gezeigt und in der Figur 15 mit daran befestigten Dichtungen 12a, bzw. Dichtlippen 12a, die vorzugsweise durch Anextrusion befestigt sind.

In beiden Figuren ist erkennbar, dass der Spaltbereich 13, in welchem die Luft strömt in solchen Bereichen bzw. Umgebungen des Kunststoffprofils 12, in denen Dichtungen 12a befestigt sind oder noch befestigt werden sollen, ein größeres Spaltmaß hat als in den anderen Bereichen, vorzugsweise überwiegenden Bereichen des Kunststoffprofils, wo keine Dichtungen vorgesehen sind. Der Spaltbereich 13 ist in den Figuren 14 und 15 nur in den Dichtungsbereichen visuell erkennbar, nicht aber in den anderen Bereichen, wenngleich er auch dort vorhanden ist, insbesondere in Umfangsrichtung über volle 360 Grad um das Kunststoffprofil 12 herum.

## Patentansprüche

1. Trocknungsvorrichtung zum Trocknen der Oberfläche eines Kunststoffprofils (12), insbesondere eines Rahmenprofils eines Fensters oder einer Tür,
a. umfassend eine Blendenanordnung (1) mit einer Profileinlaufseite (ES), einer Profilauslaufseite (AS) und einer sich zwischen diesen Seiten durch die Blendenanordnung (1) hindurcherstreckenden Ausnehmung (3), durch die ein zu trocknendes Kunststoffprofil von der Profileinlaufseite (ES) in der Richtung (R) zur Profilauslaufseite (AS) hindurchführbar ist,
b. wobei in die innere Wandung (3a) der Ausnehmung (3) an der Profileinlaufseite (ES) wenigstens eine Absaugöffnung (4) einmündet, die mit einer luftführenden Unterdruckquelle verbindbar ist, insbesondere im Betrieb verbunden ist, und
c. wobei in die innere Wandung (3a) der Ausnehmung (3) an der Profilauslaufseite (AS) wenigstens eine Ausblasöffnung (5) einmündet, die mit einer luftführenden Überdruckquelle verbindbar ist, insbesondere im Betrieb verbunden ist,
d. wobei Luft von der wenigstens einen Ausblasöffnung (5) durch die Ausnehmung (3) hindurch zu der wenigstens einen Absaugöffnung (4) förderbar ist, insbesondere die Luft bei Hindurchführung eines Kunststoffprofils (12) durch die Ausnehmung (3) in einem sich zwischen der Wandung (3a) der Ausnehmung (3) und dem Kunststoffprofil (12) ergebenden Spaltbereich (13) förderbar ist,
e. wobei die Blendenanordnung (1) einen Blendenkörper (1a) umfasst, der an der Profileinlaufseite (ES) eine Montagefläche (M_{ES}) aufweist, an der eine Einlaufplatte (1b) mit ihrer Montagefläche befestigt ist und/oder der an der Profilauslaufseite (AS) eine Montagefläche (M_{AS}) aufweist, an der eine Auslaufplatte (1c) mit ihrer Montagefläche befestigt ist, wobei die Ausnehmung (3) durch den Blendenkörper (1a), die Einlaufplatte (1b) und/oder die Auslaufplatte (1c) erstreckt ist und wobei die wenigstens eine Absaugöffnung (4) zwischen Blendenkörper (1a) und Einlaufplatte (1b) ausgebildet ist und/oder die wenigstens eine Ausblasöffnung (5) zwischen Blendenkörper (1a) und Auslaufplatte (1c) ausgebildet ist,
f. wobei an der zur Einlaufplatte (1b) weisenden Seite und/oder an der zur Auslaufplatte (1c) weisenden Seite des Blendenkörpers (1a) an der Öffnung von dessen Ausnehmung (3) wenigstens ein Randflächenbereich (8, 9) vorgesehen ist, insbesondere der in die innere Wandung (3a) der Ausnehmung (3) übergeht, der unter das Niveau von dessen Montagefläche (M_{AS}, M_{ES}) abgesenkt ist, und/oder
g. wobei an der zum Blendenkörper (1) weisenden Seite der Auslaufplatte (1c) und/oder der Einlaufplatte (1b) an der Öffnung von deren Ausnehmung (3) wenigstens ein Randflächenbereich vorgesehen ist, insbesondere der in die innere Wandung der Ausnehmung (3) übergeht, der unter das Niveau von deren Montagefläche abgesenkt ist,
h. wobei in Umfangsrichtung um die Öffnung der Ausnehmung (3)
i. vom Blendenkörper (1a) an dessen Profileinlaufseite (ES) und/oder an dessen Profilauslaufseite (AS), und/oder
ii. der Auslaufplatte (1c) an deren zum Blendenkörper (1a) weisenden Seite und/oder
iii. der Einlaufplatte (1b) an deren zum Blendenkörper (1a) weisenden Seite
der wenigstens eine abgesenkte Randflächenbereich (8, 9) in mehrere aneinander angrenzende abgesenkte Randflächenteilbereiche (8a, 8b, 9a, 9b) unterteilt ist, die durch Teilflächenbereiche (TM_{AS}, TM_{ES}) der jeweiligen Montagefläche (M_{AS}, M_{ES}) voneinander
iv. vollständig separiert sind, insbesondere dadurch, dass ein jeweiliger Teilflächenbereich (TM_{AS}, TM_{ES}) der jeweiligen Montagefläche (M_{AS}, M_{ES}) zwischen den Randflächenteilbereichen (8a, 8b, 9a, 9b) in Richtung zur Öffnung der Ausnehmung (3) erstreckt ist und bis an die innere Wandung (3a) der Ausnehmung (3) heranreicht,
oder
v. teilweise separiert sind, insbesondere dadurch, dass ein jeweiliger Teilflächenbereich (TM_{AS}, TM_{ES}) der jeweiligen Montagefläche (M_{AS}, M_{ES}) zwischen den Randflächenteilbereichen (8a, 8b, 9a, 9b) in Richtung zur Öffnung der Ausnehmung (3) erstreckt ist und in einem Abstand vor der inneren Wandung der Ausnehmung endet.

2. Trocknungsvorrichtung nach Anspruch 1, **dadurch gekennzeichnet, dass** die Ausnehmung (3), insbesondere betrachtet senkrecht zur Durchführungsrichtung (R), eine Querschnittsform hat die zumindest im Wesentlichen formgleich und um ein Spaltmaß größer ist als die Querschnittsform des hindurchführbaren Kunststoffprofils (12) senkrecht zu dessen Längserstreckungsrichtung, insbesondere wobei das Spaltmaß im Bereich von an das Kunststoffprofil (12) befestigten Dichtungen (12a) oder zu befestigenden Dichtungen (12a) größer ist als in den übrigen Bereichen.

3. Trocknungsvorrichtung nach einem der vorherigen Ansprüche, **dadurch gekennzeichnet, dass** die wenigstens eine Absaugöffnung (4) von einer an der Profileinlaufseite (ES) liegenden Oberfläche der Blendenanordnung (1), insbesondere von der Montagefläche (M_{ES}) der Blendenanordnung (1) beabstandet ist und die wenigstens eine Ausblasöffnung (5) von einer an der Profilauslaufseite (AS) liegenden Oberfläche der Blendenanordnung (1), insbesondere von der Montagefläche (M_{AS}) der Blendenanordnung (1) beabstandet ist, wobei diese beiden Abstände jeweils kleiner sind als der Abstand zwischen der wenigstens einen Absaugöffnung (4) und der wenigstens einen Ausblasöffnung (5).

4. Trocknungsvorrichtung nach einem der vorherigen Ansprüche, **dadurch gekennzeichnet, dass** eine jeweilige Ausblasöffnung (5) und eine jeweilige Absaugöffnung (4) in der Wandung (3a) der Ausnehmung (3) schlitzförmig ausgebildet ist, insbesondere schlitzförmig mit einer Erstreckung des Schlitzes senkrecht zur Durchführungsrichtung (R), insbesondere schlitzförmig mit einer Erstreckung des Schlitzes in der Umfangsrichtung um die Mittenachse (M), vorzugsweise wobei die Erstreckungslänge eines Schlitzes größer ist als die Breite des Schlitzes in der Durchführungsrichtung (R), weiter bevorzugt mit einer in der Umfangsrichtung ununterbrochenen Erstreckung des Schlitzes einer einzigen Ausblasöffnung (5) und/oder einer einzigen Absaugöffnung (4) in der inneren Wandung (3a) der Ausnehmung (3).

5. Trocknungsvorrichtung nach Anspruch 4, **dadurch gekennzeichnet, dass** bei einer Mehrzahl von in der inneren Wandung (3a) der Ausnehmung (3) in Umfangsrichtung um die Mittenachse (M) herum nebeneinander angeordneten Ausblasöffnungen (5) und/oder Absaugöffnungen (4) die Summe der Erstreckungslängen aller Ausblasöffnungen (5) in der Umfangsrichtung und/oder die Summe der Erstreckungslängen aller Absaugöffnungen (4) in der Umfangsrichtung jeweils mindestens 90 % der gesamten Umfangslänge der inneren Wandung (3a) der Ausnehmung (3) beträgt.

6. Trocknungsvorrichtung nach einem der vorherigen Ansprüche, **dadurch gekennzeichnet, dass** der wenigstens eine Randflächenbereich (9) an der Profileinlaufseite (ES) des Blendenkörpers (1) zur Montagefläche (M_{ES}) des Blendenkörpers (1) an der Profileinlaufseite (ES) einen größeren Abstand aufweist als der wenigstens eine Randflächenbereich (8) an der Profilauslaufseite (AS) des Blendenkörpers (1) zur Montagefläche (M_{AS}) des Blendenkörpers (1) an der Profilauslaufseite (AS).

7. Trocknungsvorrichtung nach einem der vorherigen Ansprüche, **dadurch gekennzeichnet, dass** eine jeweilige Absaugöffnung (4), vorzugsweise schlitzförmige Absaugöffnung (4), in der Durchführungsrichtung (R) eine größere Breite aufweist als eine jeweilige Ausblasöffnung (5), vorzugsweise schlitzförmige Ausblasöffnung (5).

8. Trocknungsvorrichtung nach einem der vorherigen Anspruch, **dadurch gekennzeichnet, dass** zwischen dem Blendenkörper (1a) und der Einlaufplatte (1b) und/oder zwischen dem Blendenkörper (1a) und der Auslaufplatte (1c) auf der von der Ausnehmung (3) abgewandten Seite des wenigstens einen im Niveau abgesenkten Randflächenbereichs (8, 9) wenigstens ein Kanal (10a, 10b) ausgebildet ist, insbesondere der sich zumindest bereichsweise entlang des wenigstens einen abgesenkten Randflächenbereichs (8) erstreckt, aus dem Luft in den Randflächenbereich (8) oder in den Luft von dem Randflächenbereich (9) strömen kann.

9. Trocknungsvorrichtung nach Anspruch 8, **dadurch gekennzeichnet, dass** ein jeweiliger Kanal (10a, 10b), vorzugsweise zumindest an einem von dessen Enden, oder zwischen den Enden eine Mündungsöffnung einer Verbindungsleitung (11) aufweist, mit welcher der Kanal (10a, 10b) mit einer Anschlussöffnung (6, 7) in einer Stirnfläche, insbesondere in einer seitlichen oder oberen / unteren Stirnfläche des Blendenkörpers (1a) verbunden ist.

10. Kombination aus einer Trocknungsvorrichtung nach einem der vorherigen Ansprüche und einem zu trocknenden Kunststoffprofil (12), wobei die Querschnittskontur der Ausnehmung (3) in der Blendenanordnung (1) an die Querschnittskontur des Kunststoffprofils (12) derart angepasst ist, dass das Kunststoffprofil berührungslos unter Wahrung eines Abstandes durch die Ausnehmung hindurchführbar ist, vorzugsweise wobei der Abstand zwischen der inneren Oberfläche (3a) der Ausnehmung (3) und der gegenüberliegenden Oberfläche des Kunststoffprofils (12), insbesondere betrachtet senkrecht zu den sich gegenüberliegenden Oberflächen, überall zumindest im Wesentlichen gleich ist oder zumindest im überwiegenden Bereich der Umfangserstreckung eines Kunststoffprofils (12) gleich ist.

11. Verfahren zum Betrieb einer Trocknungsvorrichtung nach einem der vorherigen Ansprüche, **dadurch gekennzeichnet, dass** während der Hindurchführung eines Kunststoffprofils (12) durch die Blendenanordnung (1) Luft durch die wenigstens eine Ausblasöffnung (5) in Richtung zur Oberfläche des Kunststoffprofils (12) ausgeblasen wird, insbesondere in den Spaltbereich (13) zwischen der Oberfläche des Kunststoffprofils (12) und der inneren Wandung (3a) der Ausnehmung (3) ausgeblasen wird, und durch die wenigstens eine Absaugöffnung (4) Luft und auf der Oberfläche des Kunststoffprofils (12) anhaftende Wassertropfen aus dem Spaltbereich (13) zwischen der Oberfläche des Kunststoffprofils (12) und der inneren Wandung (3a) der Ausnehmung (3) abgesaugt werden, wobei an der Oberfläche des Kunststoffprofils (12) in einem Bereich zwischen der wenigstens einen Ausblasöffnung (5) und der wenigstens einen Absaugöffnung (4) anhaftende Wassertropfen mittels eines sich zwischen der wenigstens einen Ausblasöffnung (5) und der wenigstens einen Absaugöffnung (4) durch den Spaltbereich (13) hindurch einstellenden Luftstroms in Richtung zu der wenigstens einen Absaugöffnung (4) getrieben werden.
